Europäisches Patentamt

European Patent Office

Office européen des brevets

(19)

(11) Veröffentlichungsnummer: **0 080 072**
**B1**

(12) # EUROPÄISCHE PATENTSCHRIFT

(45) Veröffentlichungstag der Patentschrift:
01.06.88

(51) Int. Cl.⁴: **C 08 F 279/06,** C 08 F 279/02

(21) Anmeldenummer: **82109973.6**

(22) Anmeldetag: **28.10.82**

(54) **Verbessertes Verfahren zur Herstellung schlagzäher Formmassen.**

(30) Priorität: **19.11.81 DE 3145675**

(43) Veröffentlichungstag der Anmeldung:
**01.06.83 Patentblatt 83/22**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**EP - A - 0 033 365**
**DE - A - 1 645 186**
**US - A - 3 178 489**

(73) Patentinhaber: **Röhm GmbH, Kirschenallee
Postfach 4242, D-6100 Darmstadt 1 (DE)**

(72) Erfinder: **Wenzel, Franz, Dr., Zeyherweg 5,
D-6100 Darmstadt (DE)**
Erfinder: **Brümmer, Heinz-Dieter, Dr., Dipl.-Chem.,
Kleiner Ring 16, D-6104 Seeheim-Jugenheim 1 (DE)**
Erfinder: **Götzen, Friedrich, Dr., Dipl.-Chem., Am
Kirschberg 21, D-6520 Worms 24 (DE)**
Erfinder: **Nothnagel, Karlheinz, Dr., Dipl.-Ing.,
Georg-Büchner-Strasse 27, D-6103 Griesheim (DE)**
Erfinder: **Vetter, Heinz, Dr.-Ing., Dipl.-Ing.,
Taunusstrasse 92, D-6101 Rossdorf 1 (DE)**
Erfinder: **Albrecht, Klaus, Dr., Dipl.-Ing.,
Vogelsbergstrasse 20, D-6500 Mainz 42 (DE)**
Erfinder: **Heth, Wilhelm, Feuerbachstrasse 5,
D-6520 Worms (DE)**

**Beschreibung**

Die Erfindung betrifft ein verbessertes Verfahren zur Herstellung transparenter, schlagzäher Formmassen auf Basis a) einer Zähphase, bestehend aus gepfropftem Polybutadien-Festkautschuk und b) einer Copolymerisat-Hartphase aus den Monomeren Methylmethacrylat und Styrol oder aus den Monomeren Methylmethacrylat, Styrol und wenigstens einem weiteren Alkylester der Methacryl- und/oder der Acrylsäure mittels Polymerisation in mehreren Verfahrensschritten.

In der Europäischen Patentanmeldung Veröffentl. Nr. 0 033 363 wird ein Verfahren zur Herstellung von transparenten schlagzähen Formmassen beschrieben auf Basis a) einer Zähphase, bestehend aus gepfropftem Polybutadien-Festkautschuk und b) einer Copolymerisat-Hartphase aus den Monomeren Methylmethacrylat, Alkylacrylat und Styrol mittels Polymerisation in mehreren Verfahrensschritten, umfassend in erster Stufe eine Vorpolymerisation der Monomeren in Gegenwart des in den Monomeren gelösten Polybutadien-Festkautschuks und eine Endpolymerisation bis zu einem Umsatz von über 80% der Monomeren, wobei in erster Stufe der Polybutadien-Festkautschuk in Anteilen von 3–10 Gew.-% in dem Gemisch der Monomeren Methylmethacrylat-Styrol-Methyl- und/oder Äthylacrylat im Gewichtsverhältnis $(73 \pm 5) : (22 \pm 2) : (5 \pm 3)$ unter Angleichung des Brechungsindex gelöst wird und unter Zusatz solcher pfropfaktiver Initiatoren, bei deren Zerfall Butoxy- bzw. Phenylradikale entstehen und in Anwesenheit von Reglern von Anfang an bis zu einem Umsatz der Monomeren, der dem 1–2 fachen Gewicht des eingesetzten Polybutadiens entspricht, polymerisiert und in einer zweiten Stufe (Inversionsstufe) die Polymerisation bis zu einem Umsatz zwischen 25 und 40% geführt wird, wobei sich Zähphasen-Teilchen bilden, deren Teilchendurchmesser durch Rühren unter Ausnutzung der Scherkräfte zwischen 0,2 und 1,5 µ gehalten wird und der Ansatz in an sich bekannter Weise der Endpolymerisation unterworfen wird.

Das Verfahren des Standes der Technik führt zwar zu hochwertigen Produkten, weist aber noch verbesserungsfähige Punkte auf. Bei der praktischen Durchführung machen sich vor allem die hohen Viskositäten in der dritten Polymerisationsstufe belastend für das Verfahren bemerkbar.

Um den erforderlichen hohen Endumsatz zu garantieren, bietet sich z. B. die Substanzpolymerisation an. Führt man die Substanzpolymerisation diskontinuierlich durch, so resultiert ein vergleichsweise hoher Arbeitsaufwand; betreibt man sie kontinuierlich, sieht man sich zu einem hohen apparativen Aufwand genötigt. Bei gewissen Verfahren des Standes der Technik wurden Lösungsmittel, wie z. B. Toluol zugesetzt, um die Viskosität der Polymerisatansätze zu erniedrigen. Die Erfahrung zeigt jedoch, dass man dabei eine Beeinträchtigung der mechanischen Eigenschaften in Kauf nehmen muss.

Es bestand daher die Aufgabe, Reaktionsbedingungen zu finden, welche die Herstellung qualitativ gleichwertiger, schlagzäher transparenter Formmassen gestatten, unter Vermeidung des nach dem Vorgehen gemäss dem Stand der Technik unvermeidbaren Aufwandes bzw. der Nachteile in Bezug auf die Produktqualität. Es wurde nun gefunden, dass das Verfahren zur Herstellung schlagzäher, weitgehend transparenter Formmassen erheblich verbessert werden kann.

Die Erfindung besteht aus einem Verfahren zur Herstellung von transparenten, schlagzähen Formmassen auf Basis

a) einer Zähphase, bestehend aus gepfropftem Polybutadien-Festkautschuk und

b) einer Copolymerisat-Hartphase aus den Monomeren Methylmethacrylat und Styrol und/oder α-Methylstyrol und gegebenenfalls wenigstens einem weiteren Alkylester der Methacryl- und/oder Acrylsäure mittels Polymerisation in mehreren Verfahrensschritten, umfassend in erster Stufe eine Vorpolymerisation der Monomeren in Gegenwart des in den Monomeren gelösten Polybutadien-Festkautschuks, wobei in erster Stufe der Polybutadien-Festkautschuk in Anteilen von 3–10 Gew.-% in dem Gemisch der Monomeren Methylmethacrylat-Styrol- und/oder α-Methylstyrol-Alkylmethacrylat und/oder Alkylacrylat gelöst wird, wobei deren Gewichtsverhältnisse so zu wählen sind, dass die gebildete Copolymerisat-Hartphase im Brechungsindex dem vorgelegten Polybutadien-Festkautschuk entspricht und ein Anteil von 15–25 Gew.-%, bezogen auf die Monomeren an Styrol und/oder α-Methylstyrol, vorhanden sein soll und unter Zusatz solcher pfropfaktiver Initiatoren, bei deren Zerfall Butoxy- bzw. Phenylradikale entstehen und in Anwesenheit von Reglern von Anfang an bis zu einem Umsatz der Monomeren, der dem 1–2 fachen Gewicht des eingesetzten Polybutadiens entspricht, polymerisiert wird, und in einer zweiten Stufe (Inversionsstufe) die Polymerisation so geführt wird, dass sich Zähphasen-Teilchen bilden, deren Teilchendurchmesser durch Rühren unter Ausnutzung der Scherkräfte zwischen 0,2 und 2,5 µm gehalten wird und in dritter Stufe der Ansatz der Endpolymerisation unterworfen wird, wobei man in erster Stufe eine Polymerisation der Monomeren in Gegenwart des in den Monomeren gelösten Polybutadien-Festkautschuks im Umsatzbereich 3–20% durchführt und in der zweiten Stufe (Inversionsstufe) die Polymerisation im Umsatzbereich zwischen 15 und 50% und in der dritten und letzten Stufe die Polymerisation bis zu einem Umsatz zwischen 40 und 75% fortsetzt.

Soweit im Rahmen der Definition der vorliegenden Erfindung die Bezeichnung Alkyl verwendet wird, kommen vorzugsweise Alkylreste mit 1 bis 8 Kohlenstoffatomen, insbesondere solche mit 1 bis 4 Kohlenstoffatomen, in Betracht.

Es muss als ausserordentlich überraschend betrachtet werden, dass man – beispielsweise bei kontinuierlicher Durchführung der Polymerisation in allen drei Stufen – unter den erfindungsgemäss einzuhaltenden Randbedingungen ein Produkt erhält, das sehr gute Schlagzähigkeit bei guten optischen Eigenschaften aufweist.

Die Durchführung des erfindungsgemässen Verfahrens kann im übrigen weitestgehend in Anlehnung an das Verfahren der oben genannten europäischen Anmeldung erfolgen. Hinsichtlich der Ausgangsmaterialien und der Polymerisationshilfsmittel und ihres Einsatzes kann die Lehre der europäischen Anmeldung unmittelbar übernommen werden. Die Durchführung des erfindungsgemässen Verfahrens kann somit in folgender Weise vorgenommen werden:

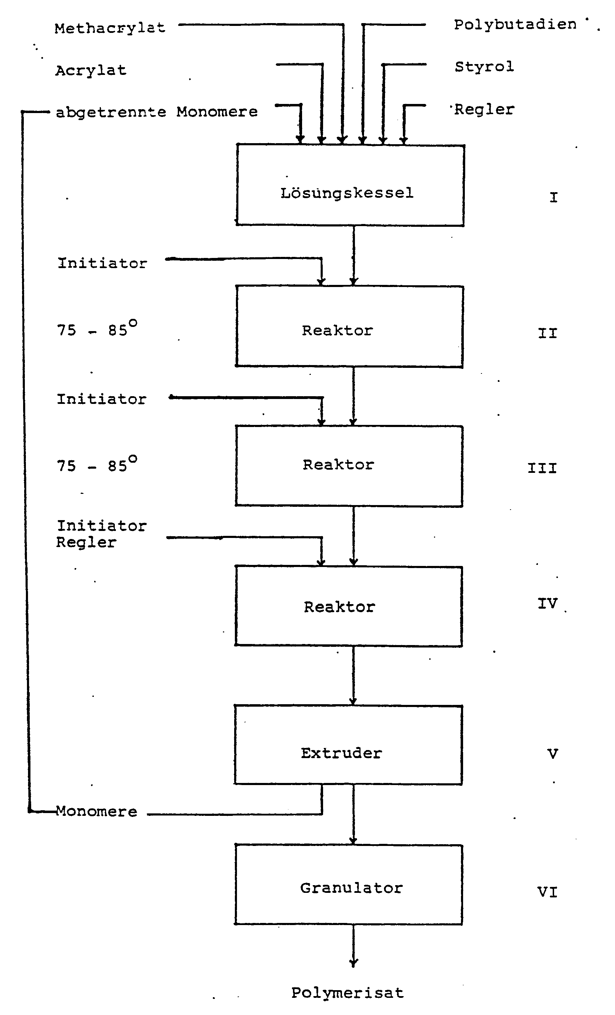

Das Polybutadien wird zerkleinert und in der Monomerenmischung, bestehend aus Methylmethacrylat, Styrol und/oder α-Methylstyrol und mindestens einem weiteren Alkylester der Acryl- und/oder der Methacrylsäure gelöst, wobei im Interesse der Transparenz auf die Angleichung des Brechungsindex der resultierenden Hartphase an den des Polybutadiens geachtet werden muss. Diese Lösung wird unter Zusatz von pfropfaktiven Initiatoren des Typs, bei dessen Zerfall ein Butoxy-, Acyloxy- oder ein Phenylradikal freigesetzt wird, insbesondere tert. Butylperneodecanoat und vorzugsweise eines Reglers, insbesondere eines Schwefelreglers, beispielsweise des tert. Dodecylmercaptans, polymerisiert. Bei der praktischen Durchführung geht man zweckmässig so vor, dass man die Lösung (von einem Lösungskessel (I) in den Reaktor (II), (s. Fliessschema lt. Fig. 1) pumpt. Dieser Reaktor kann wie der zweite Reaktor (III) als Rührkesselreaktor betrieben werden. Bei Temperaturen im ersten Polymerisationskessel von 75–85 °C und Verweilzeiten zwischen 40 und 80 Minuten wird in der Regel die Pfropfung des Polybutadiens vorgenommen, wobei der Umsatz zwischen 3 und 20%, vorzugsweise 5–10%, speziell 7–9%, gehalten wird. Der Polymersirup wird aus dem Reaktor (II) in den Reaktor (III) überführt. Anschliessend wird vorzugsweise unter erneutem Zusatz von Initiator, speziell von Dilauroylperoxid, bis zu einem höheren Umsatz polymerisiert. Bei Verweilzeiten von in der Regel zwischen 60 und 120 Minuten und bei zweckmässig gewählten Temperaturen (in gewisser Abhängigkeit vom gewählten Initiator), z.B. von 75–85 °C bei Verwendung von Dilauroylperoxid, wird die Polymerisation bis zu einem Umsatz von 15 bis 50%, vorzugsweise 20 bis 35%, fortgeführt.

Das Produkt der Umsetzung im Reaktor (II) wird – vorzugsweise unter Zusatz weiterer Initiators und gegebenenfalls weiterer Reglers – einem Reaktor (IV), beispielsweise einem Rohrreaktor zugeführt, vorteilhafterweise unter Verwendung einer Pumpe und eines statischen Mischers. Der anschliessende Polymerisationsschritt wird vorteilhaft bei Temperaturen von 100 bis 200 °C und Verweilzeiten von 10 bis 60 Minuten durchgeführt, wobei der Umsatz im Bereich von 40 bis 75% liegen soll.

Besonders hervorzuheben ist, dass das erfindungsgemässe Verfahren bereits bei Umsätzen von etwa 50% als eine sehr vorteilhafte Lösung betrachtet werden muss, die zu einem Produkt mit sehr guten Materialeigenschaften führt.

Bei Anwendung des Rohrreaktors (IV) betragen die maximalen Drucke ca. 30 bar. Vorteilhafterweise führt man den Polymersirup nach dem Reaktor (IV) einem Entgasungsextruder (V) zu. Die abgetrennten Monomeren können in den Lösungskessel (I) zurückgeführt werden. Die Polymerschmelze kann zweckmässig über ein Wasserbad einem Granulator (VI) zugeführt werden. Die nach dem erfindungsgemässen Verfahren hergestellten Formmassen zeichnen sich durch hohe Schlagzähigkeit, verbunden mit sehr guten optischen Eigenschaften aus. Gegenüber dem Verfahren des Standes der Technik (diskontinuierliche Endpolymerisation) ist das vorliegende Verfahren als wesentlich rationeller einzustufen.

Die Durchführung des Verfahrens im einzelnen geht aus dem folgenden Beispiel hervor.

Beispiel

Eine Lösung von 4,9 Gew.-Teilen Polybutadien in 76 Gew.-Teilen Methylmethacrylat, 19 Gew.-Teilen Styrol und 5 Teilen Äthylacrylat wird mit 0,1 Gew.-Teilen tert. Dodecylmercaptan als Regler in einem Rührkessel bei 81 °C mit tert. Butyl-perneodecanoat als Initiator in einer Stunde bis zu einem Umsatz von 7% kontinuierlich gepfropft.

In einem zweiten Rührkessel wird bei 77 °C und nach Zusatz von Dilauroylperoxid bei einer Verweilzeit von 90 Minuten über den Inversionspunkt hinaus zu einem Umsatz von 22% weiterpolymerisiert. Mit einer Pumpe wird diese Polymerlösung einem zweistufigen Reaktor zugeführt.

Vor der ersten Stufe dieses Reaktors wird nochmals tert. Butylperneodecanoat und zusätzlich tert.-Butylperoctoat in die Lösung gepumpt und in einem statischen Mischer gut darin verteilt. Die erste Stufe dieses Reaktors wird bei 115 °C gehalten, die zweite Stufe bei 175 °C. Nach einer Verweilzeit von je 20 Minuten in jeder der beiden Stufen beträgt der Umsatz 50% (bezogen auf die Monomeren). Von der zweiten Stufe des Reaktors wird die monomerhaltige Schmelze in einen Entgasungsextruder gedrückt, die nicht polymerisierten Anteile dort abgezogen und wieder kondensiert und die Schmelze wie üblich extrudiert und granuliert. Schlagzähe Formmassen mit den gewünschten Eigenschaften können erhalten werden, wenn man in technisch gleicher Weise als Hartphasenmonomeren die Kombinationen Methylmethacrylat/Styrol und/oder α-Methylstyrol oder Methylmethacrylat/Alkylacrylat/Styrol und/oder α-Methylstyrol wie auch Methylmethacrylat/Alkylmethacrylat/Styrol und/oder α-Methylstyrol einsetzt.

**Patentansprüche**

1. Verfahren zur Herstellung von transparenten, schlagzähen Formmassen auf Basis
a) einer Zähphase, bestehend aus gepfropftem Polybutadien-Festkautschuk und
b) einer Copolymerisat-Hartphase aus den Monomeren Methylmethacrylat, und Styrol und/oder α-Methylstyrol und gegebenenfalls wenigstens einem weiteren Alkylester der Methacryl- und/oder Acrylsäure
mittels Polymerisation in mehreren Verfahrensschritten, umfassend in erster Stufe eine Vorpolymerisation der Monomeren in Gegenwart des in den Monomeren gelösten Polybutadien-Festkautschuks, wobei in erster Stufe der Polybutadien-Festkautschuk in Anteilen von 3–10 Gew.-% in dem Gemisch der Monomeren Methylmethacrylat-Styrol- und/oder α-Methylstyrol-Alkylmethacrylat und/oder Alkylacrylat gelöst wird, wobei deren Gewichtsverhältnisse so zu wählen sind, dass die gebildete Copolymerisat-Hartphase im Brechungsindex dem vorgelegten Polybutadien-Festkautschuk entspricht und ein Anteil von 15–25 Gew.-%, bezogen auf die Monomeren an Styrol und/oder α-Methylstyrol, vorhanden sein soll und unter Zusatz solcher pfropfaktiver Initiatoren, bei deren Zerfall Butoxy- bzw. Phenylradikale entstehen und in Anwesenheit von Reglern von Anfang an bis zu einem Umsatz der Monomeren, der dem 1–2 fachen Gewicht des eingesetzten Polybutadiens entspricht, polymerisiert wird, und in einer zweiten Stufe (Inversionsstufe) die Polymerisation so geführt wird, dass sich Zähphasen-Teilchen bilden, deren Teilchendurchmesser durch Rühren unter Ausnutzung der Scherkräfte zwischen 0,2 und 2,5 µm gehalten wird und in dritter Stufe der Ansatz der Endpolymerisation unterworfen wird, wobei man in erster Stufe eine Polymerisation der Monomeren in Gegenwart des in den Monomeren gelösten Polybutadien-Festkautschuks im Umsatzbereich 3–20% durchführt, dadurch gekennzeichnet, dass man in der zweiten Stufe (Inversionsstufe) die Polymerisation im Umsatzbereich zwischen 15 und 50% und in der dritten und letzten Stufe die Polymerisation bis zu einem Umsatz zwischen 40 und 75% fortsetzt.

2. Verfahren zur Herstellung von transparenten, schlagzähen Formmassen gemäss Anspruch 1, dadurch gekennzeichnet, dass man in erster Stufe eine Polymerisation der Monomeren in Gegenwart des in den Monomeren gelösten Polybutadien-Festkautschuks im Umsatzbereich 5–10% durchführt.

3. Verfahren zur Herstellung von transparenten, schlagzähen Formmassen, gemäss den Ansprüchen 1 und 2, dadurch gekennzeichnet, dass man in der zweiten Stufe die Polymerisation im Umsatzbereich zwischen 20 und 35% durchführt.

4. Verfahren zur Herstellung von transparenten, schlagzähen Formmassen, gemäss den Ansprüchen 1 bis 3, dadurch gekennzeichnet, dass man das Verfahren kontinuierlich durchführt.

## Claims

1. Process for preparing transparent, tough moulding compositions based on

a) a viscous phase, consisting of grafted polybutadiene solid rubber and

b) a copolymer hard phase consisting of the monomers methylmethacrylate and styrene and/or α-methylstyrene and optionally at least one further alkyl ester of methacrylic and/or acrylic acid

by polymerisation in several stages, comprising in the first stage prepolymerisation of the monomers in the presence of the polybutadiene solid rubber dissolved in the monomers, whilst in the first stage the polybutadiene solid rubber is dissolved in amounts of from 3 to 10% by weight in the mixture of the monomers methylmethacrylate/styrene and/or α-methylstyrene/alkylmethacrylate and/or alkylacrylate, the proportions by weight being selected so that the copolymer hard phase formed corresponds in its refractive index to the polybutadiene solid rubber used and there should be an amount of from 15 to 25% by weight, based on the monomers, of styrene and/or α-methylstyrene, and polymerisation is carried out with the addition of graft-active initiators which form butoxy or phenyl radicals when they decompose and in the presence of regulators from the beginning until there is a conversion of the monomers corresponding to 1 to 2 times the weight of the polybutadiene used, and in a second stage (inversion stage) polymerisation is controlled so that viscous phase particles are formed the particle diameter of which is maintained at between 0.2 and 2.5 microns by stirring, using the shear forces, and in the third stage the mixture is subjected to final polymerisation, whilst in the first stage polymerisation of the monomers is carried out in the presence of the polybutadiene solid rubber dissolved in the monomers, with conversion in the range from 3 to 20%, characterised in that in the second stage (inversion stage) the polymerisation is continued with a conversion in the range from 15 to 50% and in the third and last stage polymerisation is continued until a conversion of between 40 and 75% is achieved.

2. Process for preparing transparent tough moulding compositions as claimed in claim 1, characterised in that in the first stage polymerisation of the monomers is carried out in the presence of the polybutadiene solid rubber dissolved in the monomers with a conversion in the range from 5 to 10%.

3. Process for preparing transparent tough moulding compositions as claimed in claims 1 and 2, characterised in that the second stage polymerisation is carried out with a conversion in the range from 20 to 35%.

4. Process for preparing transparent tough moulding compositions as claimed in claims 1 to 3, characterised in that the process is carried out continuously.

## Revendications

1. Procédé pour la préparation de matières à mouler résistantes au choc et transparentes à base

a) d'une phase visqueuse, se composant de caoutchouc solide de polybutadiène greffé et

b) d'une phase dure de copolymère, formée des monomères méthacrylate de méthyle, styrène et/ou α-méthylstyrène et éventuellement au moins un autre ester alkylique de l'acide méthacrylique et/ou acrylique,

par polymérisation en plusieurs étapes opératoires, procédé qui comprend, dans une première étape, une prépolymérisation des monomères en présence du caoutchouc solide de polybutadiène dissous dans les monomères, première étape dans laquelle le caoutchouc dur de polybutadiène est dissous dans des proportions de 3 à 10% en poids dans le mélange des monomères méthacrylate de méthyle-styrène et/ou α-méthylstyrène-méthacrylate d'alkyle et/ou acrylate d'alkyle, le rapport en poids de ces monomères devant être choisi de telle manière que l'indice de réfraction de la phase dure de copolymère formée corresponde à celui du caoutchouc solide de polybutadiène de départ et qu'une proportion de 15 à 25% en poids de styrène et/ou d'α-méthylstyrène, par rapport aux monomères, soit présente, et la polymérisation étant effectuée avec addition d'initiateurs à action de greffage dont la décomposition donne lieu à des radicaux butoxy ou phényle et en présence de régulateurs depuis le début jusqu'à un degré de transformation des monomères qui correspond à 1 à 2 fois le poids du polybutadiène mis en réaction, tandis que, dans une deuxième étape (étape d'inversion), la polymérisation est conduite de telle manière qu'il se forme des particules de phase visqueuse dont le diamètre est maintenu entre 0,2 et 2,5 µm par agitation avec mise à profit des efforts de cisaillement, et que, dans une troisième étape, la charge est soumise à la polymérisation finale, la polymérisation des monomères en présence du caoutchouc solide de polybutadiène dissous dans les monomères étant effectuée, dans la première étape, jusqu'à un degré de transformation dans la gamme de 3 à 20%, caractérisé en ce que, dans la deuxième étape (étape d'inversion), la polymérisation est poursuivie jusqu'à un degré de transformation dans la gamme de 15 à 50% et, dans la troisième et dernière étape, la polymérisation est poursuivie jusqu'à un degré de transformation compris entre 40 et 75%.

2. Procédé pour la préparation de matières à mouler résistantes au choc et transparentes selon la revendication 1, caractérisé en ce que, dans la première étape, on effectue une polymérisation des monomères en présence du caoutchouc solide de polybutadiène dissous dans les monomères, jusqu'à un degré de transformation dans la gamme de 5 à 10%.

3. Procédé pour la préparation de matières à mouler résistantes au choc et transparentes selon la revendication 1 ou 2, caractérisé en ce que, dans la deuxième étape, on effectue la polymérisation jusqu'à un degré de transformation dans la gamme de 20 à 35%.

4. Procédé pour la préparation de matières à mouler résistantes au choc et transparentes selon l'une quelconque des revendications 1 à 3, caractérisé en ce qu'on conduit le procédé en continu.

0 080 072

Methacrylat ——————————— Polybutadien

Acrylat ——————— Styrol

abgetrennte Monomere ——— Regler

Lösungskessel     I

Initiator

75 – 85°     Reaktor     II

Initiator

75 – 85°     Reaktor     III

Initiator
Regler     Reaktor     IV

Extruder     V

Monomere —————

Granulator     VI

Polymerisat

7